(19) Europäisches Patentamt

European Patent Office

Office européen des brevets

(11) Veröffentlichungsnummer: **0 257 206 B1**

(12) # EUROPÄISCHE PATENTSCHRIFT

(45) Veröffentlichungstag der Patentschrift: **11.03.92**

(21) Anmeldenummer: **87107447.2**

(22) Anmeldetag: **22.05.87**

Teilanmeldung 90125185.0 eingereicht am 22/05/87.

(51) Int. Cl.5: **H01H 13/02**, H02B 1/04

(54) **Melde- und ggf. Befehlsgerät für den Frontplatteneinbau.**

(30) Priorität: **30.06.86 DE 3621901**

(43) Veröffentlichungstag der Anmeldung:
**02.03.88 Patentblatt 88/09**

(45) Bekanntmachung des Hinweises auf die
Patenterteilung:
**11.03.92 Patentblatt 92/11**

(84) Benannte Vertragsstaaten:
**CH DE ES FR GB IT LI**

(56) Entgegenhaltungen:
**DE-A- 1 490 022**
**DE-B- 1 813 317**
**FR-A- 1 522 558**
**GB-A- 1 263 029**

(73) Patentinhaber: **Elan Schaltelemente GmbH**
**Hauptstrasse 97**
**W-6301 Wettenberg 1(DE)**

(72) Erfinder: **Willems, Jürgen**
**Karlsruher Strasse 58**
**W-4000 Düsseldorf-Eller(DE)**
Erfinder: **Beyer, Detlev**
**Lübisrather Strasse 58**
**W-4040 Neuss 26(DE)**
Erfinder: **Schöning, Ewald**
**Eichenstrasse 100**
**W-4010 Hilden(DE)**

(74) Vertreter: **Sparing - Röhl - Henseler Patentan-**
**wälte**
**Rethelstrasse 123 Postfach 14 02 68**
**W-4000 Düsseldorf 1(DE)**

## Beschreibung

Die Erfindung betrifft ein Melde- und gegebenenfalls Befehlsgerät für den Frontplatteneinbau mit einem Kopfteil mit einer in einer Bohrung der Frontplatte einsteckbaren und an der Frontplatte sicherbaren Hülse, in der eine Lampenfassung zur Aufnahme von Übertragungskontaktteilen für eine Lampe gleitbeweglich angeordnet und die frontseitig durch eine abnehmbare, kalottenförmige Drucktaste verschlossen ist, wobei die Lampenfassung längsverschiebbar in der Hülse geführt und durch die Drucktaste, gegen die die Lampenfassung federvorgespannt ist, in der Hülse gehalten ist.

Bei Meldegeräten für den Frontplatteneinbau, die eine Lampe aufweisen, stellt der Lampenwechsel einen immer wiederkehrenden Arbeitsgang im Rahmen der Servicearbeiten dar, wobei es üblich ist, daß der Lampenwechsel von der Frontseite her erfolgt, etwa indem eine Kalotte, die die Lampe abdeckt, abgeschraubt und dann die Lampe aus der feststehenden Lampenfassung heraus mit einem speziellen Werkzeug, einem "Lampenzieher", gewechselt wird.

Bei dem aus der FR-A-1 522 558 bekannten Meldegerät der eingangs genannten Art wird eine Lampenfassung federvorgespannt in einer Außenhülse gehalten, indem ein eigenständiges Betätigungsglied mit Arretierungsnasen zwischen der Lampenfassung und einer feststehenden kalottenförmigen Drucktaste eingespannt wird. Die Drucktaste bildet einen Anschlag für das Arretierungsglied im zusammengebauten Zustand des Meldegeräts, bei dem das Betätigungsglied die Lampenfassung derart unter Federvorspannung hält, daß die Lampe in der Frontplatte positioniert ist. Zur Herstellung einer Kontaktierung und damit zur Betätigung des Meldegerätes wird das Betätigungsglied gegen die Federvorspannung in die Außenhülse gedrückt, bis die Arretierungsnasen gegen einen Anschlag an der Außenhülse anstoßen. Bei einem derartigen Meldegerät ist der Lampenwechsel von vorne ohne Werkzeug möglich, da eine Rückstellfeder die Lampenfassung auch teilweise aus der Außenhülse herausdrückt, so daß die Lampe leicht zugänglich ist. Zur Betätigung eines derartigen Meldegerätes ist allerdings das zusätzliche Betätigungsglied erforderlich, zu dessen Einspannung die feststehende Drucktaste erforderlich ist. Trotz dieses mehrteiligen Aufbaues ermöglicht dieses Gerät keine Anpassung der Federvorspannung an den jeweiligen Zweck, um einerseits das "Vorspringen" der Lampe und andererseits den Gegendruck für die Betätigung des Geräts optimal einstellen zu können. Schließlich ermöglicht ein derartiger Aufbau auch kein einfaches Wechseln der Lampe bei gedrückter Drucktaste, und zur Vermeidung eines kompletten Herausspringens der Rückstellfeder sind zusätzliche Arretierungsmittel erforderlich.

Aufgabe der Erfindung ist es, ein Melde- und gegebenenfalls Befehlsgerät der eingangs genannten Art zu schaffen, bei dem der Lampenwechsel von vorne ohne Werkzeug möglich ist.

Diese Aufgabe wird dadurch gelöst, daß an der Drucktaste eine koaxial zur Hülse angeordnete Innenhülse lösbar befestigt ist, die zusammen mit der Drucktaste in der Hülse längsbeweglich geführt sowie gegen die Frontplatte federvorgespannt gehalten ist, wobei die Drucktaste einen Anschlag für die von der Innenhülse aufgenommene und gegen die Drucktaste federvorgespannte Lampenfassung bildet.

Wenn die kalottenförmige Drucktaste, die die Lampe abdeckt, gelöst wird, "springt" die gesamte Fassung mit der Lampe dem Monteur entgegen und läßt sich aus dem Gerät herausnehmen. Der Lampenwechsel erfolgt dann von Hand, und die gesamte Fassung wird wieder in das Gerät gesteckt und mit der Drucktaste festgehalten.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt im Schnitt eine erste Ausführungsform eines Melde- und Befehlsgerätes im Frontplatteneinbau.

Fig. 2 zeigt eine zweite Ausführungsform im Schnitt.

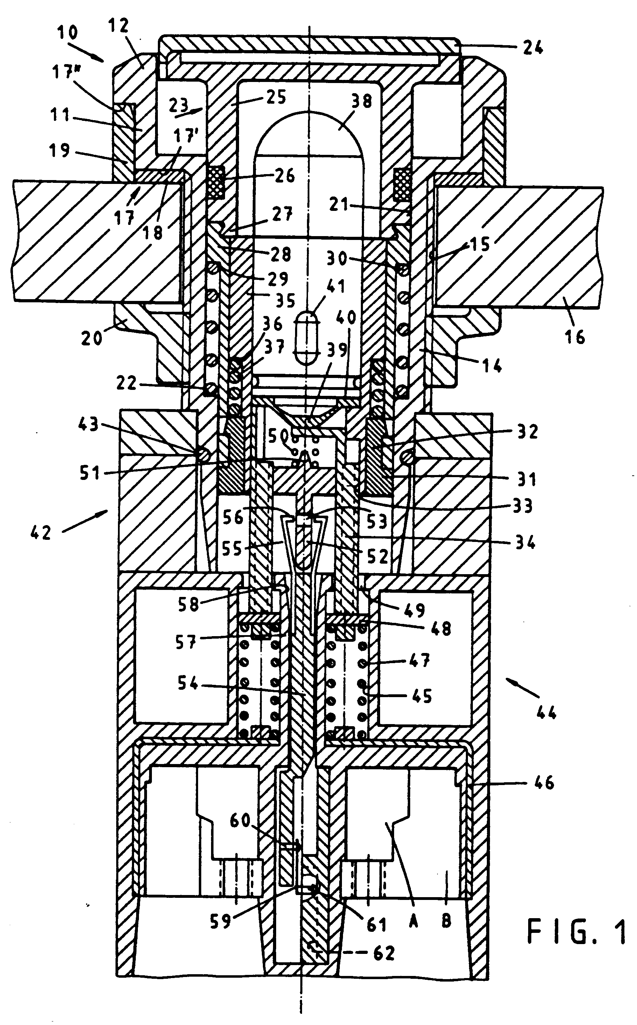

Das in Fig. 1 dargestellte Melde- und Befehlsgerät umfaßt ein Kopfteil 10 mit einer Hülse 11, die einen frontseitigen Kragen 12 und einen mit Außengewinde versehenen Abschnitt 14 mit vermindertem Durchmesser aufweist, der von einer Bohrung 15 einer Frontplatte 16 aufgenommen wird. Die Hülse 11 besitzt eine gestufte Schulter 17 zwischen dem Kragen 12 und dem Abschnitt 14 mit einem inneren umlaufenden Abschnitt 17', der sich über eine Frontplattendichtung 18 auf der Frontplatte 16 abstützt, und einem äußeren umlaufenden Abschnitt 17", der sich über einen Frontring 19 frontseitig auf der Frontplatte 16 abstützt, wobei der Frontring 19 die Frontplattendichtung 18 nach außen abdeckt und bündig zu dem Kragen 12 angeordnet ist. Die Hülse 11 wird rückseitig von der Frontplatte 16 durch eine Kontermutter 20 gesichert.

Das Kopfteil 10 ermöglicht auch eine gegenüber der dargestellten vorstehenden Frontplatteneinbauweise versenkte Frontplatteneinbauweise, indem eine Bohrung 15 mit einem Durchmesser oder Quadrat entsprechend dem Außendurchmesser oder Außenquadrat des Abschnitts 17' zusammen mit einem Druckring zwischen Kontermutter 20 und Frontplatte 16, jedoch ohne Frontring 19 und Frontplattendichtung 18 verwendet wird.

Die Bohrung 21 der Hülse 11 besitzt eine Schulter 22 benachbart zum rückwärtigen Ende und nimmt eine kalottenförmige Drucktaste 23 auf, die mit einem Deckel 24 versehen ist, der auf die Drucktaste 23 aufgerastet ist. Die Drucktaste 23 und der Deckel 24 bestehen aus gegebenenfalls farbigem, transparentem Kunststoffmaterial. Die Drucktaste 23 besitzt einen rohrförmigen Abschnitt 25, der längsverschieblich in der Bohrung 21 geführt ist. Der Abschnitt 25 besitzt eine umlaufende Nut zur Aufnahme einer Schleifdichtung 26.

Die Drucktaste 23 ist über entsprechende Rastnasen 27 mit einer Innenhülse 28 lösbar verbunden, die eine Schulter 29 gegenüber von der Schulter 22 aufweist. Zwischen den beiden umlaufenden Schultern 22, 29 befindet sich eine Druckfeder 30. Eine Abstützplatte 31 ist über entsprechende Arme 32 mit dem rückwärtigen Ende der Innenhülse 28 verrastet und trägt Durchbrüche 33 für Übertragungs-Kontaktteile 34. Eine hülsenförmige Lampenfassung 35 wird von der Innenhülse 28 aufgenommen und besitzt eine zur Abstützplatte 31 gerichtete Schulter 36, wobei zwischen der Schulter 36 und den Armen 32 der Abstützplatte 31 eine Druckfeder 37 angeordnet ist. Der Innendurchmesser der Innenhülse 28 ist größer als der Innendurchmesser des rohrförmigen Abschnittes 25 der Drucktaste 23, während der Außendurchmesser der Lampenfassung 35 praktisch gleich dem Innendurchmesser der Innenhülse 28 ist, so daß die Lampenfassung 35 durch die Druckfeder 37, die sich an den Armen 32 abstützt, gegen die Rückseite der Drucktaste 23 gedrückt und von letzterer in der Hülse 11 gehalten wird.

Die Lampenfassung 35 nimmt eine Lampe 38 mit einem mittleren Fußkontakt 39 und einem äußeren ringförmigen Fußkontakt 40 auf. Ferner besitzt die Lampe 38 einen an ihrer Seitenwand vorgesehenen Vorsprung 41, der in der Lampenfassung 35 in einer hierfür vorgesehenen im wesentlichen L-förmigen Ausnehmung (nicht dargestellt) abgestützt wird, so daß die Lampe 38 mit ihrem vorderen Teil aus der Lampenfassung 35 herausragend - wie dargestellt - gehalten wird.

Mit dem rückwärtigen Ende der Hülse 11 ist über einen zweiteiligen Halter 42, der mit Hilfe von Federdrähten 43 an der Hülse 11 lösbar befestigt ist, ein Gehäuse 44 gehalten, das zwei sich in Axialrichtung der Hülse 11 erstreckende zylindrische Führungen 45 aufweist, in denen rückseitig Kontaktfahnen 46 münden, die mit Schraubanschlußklemmen A verschweißt sind, und die Schraubanschlußklemmen A Drahtanschlußöffnungen B aufweisen, die dem Anwender als elektrischer Anschluß dienen,an denen sich Druckfedern 47 elektrisch kontaktierend abstützen, die frontseitig ein Abstützteil 48 tragen, an dem sich die Übertragungs-Kontaktteile 34 rückseitig abstützen, so daß eine Stormversorgung der Kontakte 39, 40 der Lampe 38 gewährleistet ist. Die Führungen 45 besitzen frontseitig verengte Austrittsöffnungen 49 für die Übertragungs-Kontaktteile 34, so daß die Abstützteile 48 nicht unter der Einwirkung der Federn 47 austreten können.

Der den Fußkontakt 39 kontaktierende Übertragungskontaktteil 34 kann zusätzlich durch eine Druckfeder 50, die durch einen Vorsprung 51 an der Abstützplatte 31 zentriert wird, gegen den Fußkontakt 39 gedrückt werden, um eine sicherere Kontaktierung zu gewährleisten. Die Abstützplatte 31 besitzt ferner einen rückwärts gerichteten axialen Fortsatz 52 mit einer Durchtrittsöffnung 53. Ein axialer Stößel 54, der sich unmittelbar an den Fortsatz 52 anschließt, trägt vorderseitig zwei Federn 55 mit hakenförmigen nach innen gerichteten freien Enden 56. Die freie Länge der Federn 55 in Axialrichtung entspricht im wesentlichen dem Abstand der Öffnung 53 vom hinteren Ende des Fortsatzes 52. Der Stößel 54 ist in einer Axialführung 57 angeordnet, die eine trichterförmige Erweiterung 58 benachbart zum vorderen Ende des Stößels 54 aufweist. Das rückwärtige Ende des Stößels 54 ist abgekröpft und trägt drehbar gelagert einen Rasthebel 59, der über seinen Niet 60 mit dem abgekröpften Ende des Stößels 54 verbunden ist. Der Rasthebel 59 besitzt einen zweiten Niet 61, der in eine herzförmige Schaltkurve 62 eingreift.

Der Lampenwechsel erfolgt in der Weise, daß der Deckel 24 von der Drucktaste 23 entfernt und danach die Drucktaste 23 von der Innenhülse 28 abgeklippt wird. Die Druckfeder 37 drückt dann die Lampenfassung 35 in Richtung zur Frontseite aus der Innenhülse 28 heraus, so daß sie sich ohne weiteres aus dem Gerät herausnehmen läßt. Die Auswerfbewegung der Lampenfassung 35 wird zusätzlich unterstützt durch die Druckfedern 47 und 50, die auf die Übertragungs-Kontaktteile 34 in Auswurfrichtung einwirken.

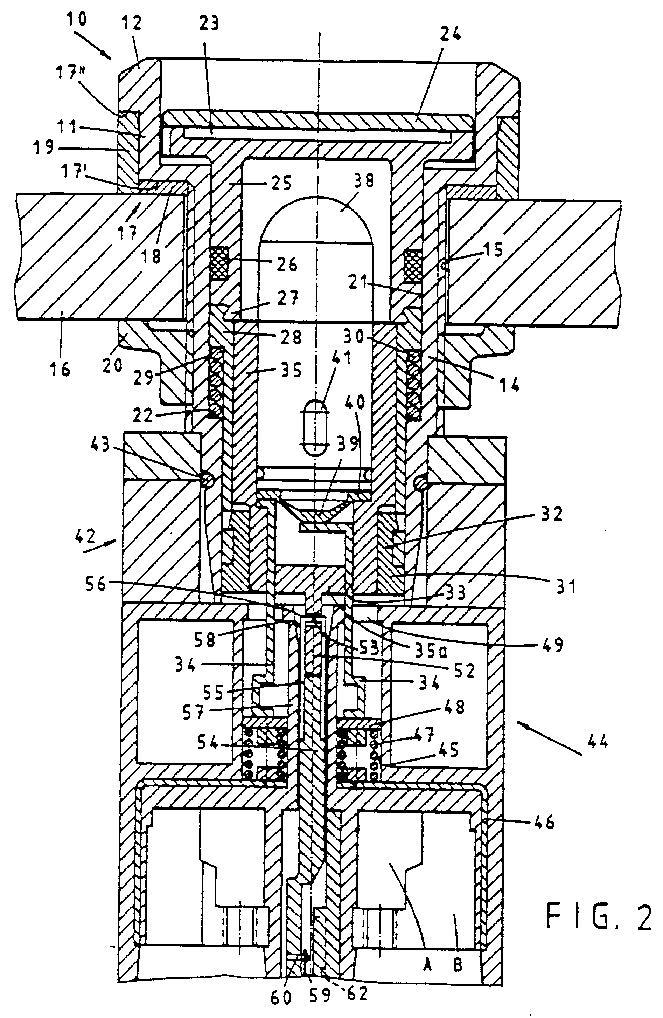

Zur Betätigung eines Druckschalters wird die Drucktaste 23 bezüglich der Hülse 11 einwärts gedrückt (vergleiche auch Fig. 2), wobei der zweite Niet 62 des Rasthebels 59 aus der vorderen Halteposition der Schaltkurve 62 in eine hintere Rastposition in dieser Schaltkurve 62 bewegt wird. Außerdem wird durch das Eindrücken der Drucktaste 23 der Fortsatz 52 in die Axialführung 57 geschoben, so daß die Federn 55 durch die Axialführung 57 und deren Erweiterung 58 in zwangsgeführten Eingriff mit der Öffnung 53 gelangen und auf diese Weise die Drucktaste 23 mit den damit in Eingriff stehenden Teilen in der eingedrückten Stellung zurückhalten. Durch erneutes Drücken der Drucktaste 23 gelangt der zweite Niet 61 aus der Raststellung der Schaltkurve 62, so daß die Druckfeder 30 die Drucktaste 23 und die damit verbundenen Teile in die in Fig. 1 dargestellte Ausgangsposition zurückdrückt. Über den Stößel 54 kann aber auch anstelle eines Druckschalters ein Tastelement betätigt werden, wobei dann der Fortsatz 52 mit dem Stößel 54 einstückig ist und die Federn 55 entfallen.

Bei der in Fig. 2 dargestellten Ausführungsform ist das Abstützteil 31 als Ring ausgebildet, das die Lampenfassung 35 aufnimmt, die einen Boden 35a besitzt, der den Fortsatz 52 mit der Öffnung 53 trägt. Die Übertragungs-Kontaktteile 34 sind durch den Boden 35a der Lampenfassung 35 geführt und zur Frontseite hin mittels der Druckfedern 47 vorgespannt. Die Druckfeder 37 ist hierbei entfallen. Im nichteingedrückten Zustand der Drucktaste 23 wird zum Wechseln der Lampe 38 der Deckel 24 und die Drucktaste 23 entfernt, woraufhin die Lampenfassung 35 einschließlich der Lampe 38 und der Übertragungs-Kontaktteile 34 aufgrund der Einwirkung der Druckfedern 47 aus der Innenhülse 28 ausgeworfen wird, so daß sie zum Wechseln der Lampe 38 ergriffen und gänzlich herausgezogen werden kann.

Neben dem Vorteil des einfachen Lampenwechsels hat man auch den Vorteil, daß die Lampe 38 mitläuft, d.h. immer an der gleichen Stelle steht, ob die Drucktaste 23 gedrückt oder nicht gedrückt ist, und somit immer eine gleichmäßige Ausleuchtung der Drucktaste 23 gewährleistet. Dies ist auch dann der Fall, wenn über die Drucktaste 23 ein Rastschalter oder dergleichen betätigt wird, wie vorstehend beschrieben ist.

**Patentansprüche**

1. Melde- und gegebenenfalls Befehlsgerät für den Frontplatteneinbau mit einem Kopfteil (10) mit einer in einer Bohrung (15) der Frontplatte (16) einsteckbaren und an der Frontplatte (16) sicherbaren Hülse (11), in der eine Lampenfassung (35) zur Aufnahme von Übertragungs-Kontaktteilen (34) für eine Lampe (38) gleitbeweglich angeordnet und die frontseitig durch eine abnehmbare, kalottenförmige Drucktaste (23) verschlossen ist, wobei die Lampenfassung (35) längsverschiebbar in der Hülse (11) geführt und durch die Drucktaste (23), gegen die die Lampenfassung (35) federvorgespannt ist, in der Hülse (11) gehalten ist, **dadurch gekennzeichnet,** daß an der Drucktaste (23) eine koaxial zur Hülse (11) angeordnete Innenhülse (28) lösbar befestigt ist, die zusammen mit der Drucktaste (23) in der Hülse (11) längsbeweglich geführt sowie gegen die Frontplatte (16) federvorgespannt gehalten ist, wobei die Drucktaste (23) einen Anschlag für die von der Innenhülse (28) aufgenommene und gegen die Drucktaste (23) federvorgespannte Lampenfassung (35) bildet.

2. Gerät nach Anspruch 1, dadurch gekennzeichnet, daß benachbart zu der Lampenfassung (35) am rückwärtigen Ende hiervon ein Abstützteil (31) angeordnet ist, an dem sich die die Lampenfassung (35) zur Frontseite hin beaufschlagende Druckfeder (37) abstützt.

3. Gerät nach Anspruch 1 oder 2, dadurch gekennzeichnet, daß das Abstützteil (31) ringförmig ist, während die Lampenfassung (35) mit einem Boden (35a) versehen ist, durch den die Übertragungs-Kontaktteile (34) geführt sind.

4. Gerät nach Anspruch 1 oder 2, dadurch gekennzeichnet, daß das Abstützteil (31) plattenförmig und die Lampenfassung (35) hülsenförmig sind, wobei die Übertragungs-Kontaktteile (34) durch das Abstützteil (31) geführt sind.

5. Gerät nach einem der Ansprüche 1 bis 4, dadurch gekennzeichnet, daß die Übertragungs-Kontaktteile (34) in Axialrichtung der Hülse (11) zur Lampe (38) hin federvorgespannt angeordnet sind.

6. Gerät nach einem der Ansprüche 1 bis 5, dadurch gekennzeichnet, daß die Drucktaste (23) und die Innenhülse (28) über eine lösbare Rastverbindung (27) verbunden sind.

7. Gerät nach einem der Ansprüche 2 bis 6, dadurch gekennzeichnet, daß das Abstützteil (31) mit der Innenhülse (28) über eine Rastverbindung verbunden ist.

**Claims**

1. Signal and where necessary control device for front mounting on a panel, the device having a head (10) within a casing (11) which can be inserted in an aperture (15) in the front panel (16) and secured to the said front panel (16), a slidable lamp socket (35) to receive electrically conductive contacts (34) for a lamp (38) and closed at the front by a removable calotte shape press button (23), the lamp socket (35) being longitudinally displaceable within the casing (11) and held in the said casing (11) by the press button (23), with the lamp socket (35) being spring-biased, characterised by the fact that an internal casing (28), positioned coaxially with respect to the casing (11), is detachably secured to the press button (23) and is longitudinally movable together with the said press button (23) forming a stop for the lamp socket (35) accommodated in the internal casing (28) and spring-biased with respect to the press button (23).

**2.** Device in accordance with Claim 1, characterised by the fact that adjacent the rear end of the lamp socket (35), a support part (31) is provided against which bears a compression spring (37) biasing the lamp socket (35) towards the front.

**3.** Device in accordance with Claim 1 or 2, characterised by the fact that the support part (31) is annular and the lamp socket (35) has a base (35a) through which the contacts (34) pass.

**4.** Device in accordance with Claim 1 or 2, characterised by the fact that the support part (31) is plate-shaped and the lamp socket (35) sleeve-shaped, the contacts (34) passing through the support part (31).

**5.** Device in accordance with one of Claims 1 to 4, characterised by the fact that the contacts (34) are arranged so as to be spring-biased in the axial direction of the casing (11) towards the lamp 38.

**6.** Device in accordance with any one of Claims 1 to 5 characterised by the fact that the press button (23) and the internal casing (28) are interconnected by a detachable snap connection (27).

**7.** Device in accordance with any one of Claims 2 to 6, characterised by the fact that the support part (31) is connected to the internal casing (28) by a snap connection.

**Revendications**

**1.** Dispositif de signalisation et le cas échéant de commande pour le montage sur un panneau frontal, avec une partie de tête (10) comportant une douille (11), susceptible d'être enfichée dans un alésage (15) du panneau frontal (16) et fixé à ce dernier, dans laquelle est disposée une monture de lampe (35), pour recevoir des pièces de contact de transmission (34) pour une lampe (38), montée coulissante et obturée en face avant par un bouton poussoir (23) en forme de calotte, extractible, la monture de lampe (35) étant guidée longitudinalement dans la douille (11) et maintenue dans cette dernière grâce au bouton poussoir (23), contre lequel la monture de lampe (35) est pressé sous la précontrainte d'un ressort, caractérisé en ce qu'une douille intérieure (28), disposée coaxialement par rapport à la douille (11) est fixée amovible sur le bouton poussoir (23) et maintenue guidée de façon à pouvoir coulisser longitudinalement dans la douille (11), conjointement avec le bouton poussoir (23), ainsi qu'en étant pressé contre le panneau frontal, par la précontrainte d'un ressort, le bouton poussoir (23) formant une butée pour la monture de lampe (35) qui est logée par la douille intérieure (28) et pressée contre le bouton poussoir (23) sous la précontrainte d'un ressort.

**2.** Dispositif selon la revendication 1, caractérisé en ce qu'une partie d'appui (31), sur laquelle le ressort de compression (37) qui sollicite la monture de lampe (35) prend appui par rapport au panneau frontal, est disposée, au voisinage de la monture de lampe (35), sur son extrémité arrière,

**3.** Dispositif selon la revendication 1 ou 2, caractérisé en ce que la partie d'appui (31) est annulaire, tandis que la monture de lampe (35) est pourvue d'un fond (35a) au travers duquel sont passées les pièces de contact de transmission (34).

**4.** Dispositif selon la revendication 1 ou 2, caractérisé en ce que la partie d'appui (31) est en forme de plaque et la monture de lampe (35) est en forme de douille, les pièces de contact de transmission (34) étant passées au travers de la partie d'appui (31).

**5.** Dispositif selon l'une des revendications 1 à 4, caractérisé en ce que les pièces de contact de transmission (34) sont disposées en direction axiale de la douille (11), précontraintes vers la lampe (38) par un ressort.

**6.** Dispositif selon l'une des revendications 1 à 5, caractérisé en ce que le bouton poussoir (23) et la douille intérieure (28) sont reliés par une liaison à cliquet (27) amovible.

**7.** Dispositif selon l'une des revendications 2 à 6, caractérisé en ce que la partie d'appui (31) est reliée à la douille intérieure (28) par l'intermédiaire d'une liaison à cliquet.

FIG. 1

FIG. 2